# DEMANDE DE BREVET EUROPEEN

(11) **EP 1 333 261 A1**
(43) Date de publication de la demande: **06.08.2003**
(21) Numéro de dépôt: 03356001.2
(22) Date de dépôt: 07.01.2003
(51) Int. Cl.: G01K 1/14

(54) **Capteur de température pour un appareil électroménager comportant un element amovible**

(30) Priorité: 30.01.2002 FR 0201103
(71) Demandeur: SEB S.A., 69130 Ecully (FR)
(72) Inventeur: Gailhard, Thierry, 69970 Chaponnay (FR); Bizard, Jean-Claude, 21121 Fontaine les Dijon (FR)
(74) Mandataire: Kiehl, Hubert

(57) **Abrégé**

- L'invention concerne un capteur de température pour appareil électroménager comportant une partie amovible par rapport à un bâti, ce capteur comprenant une thermistance (24) montée sur un support isolant (25) disposé sur la face interne d'un fond (12) d'une coupelle (11), la face externe dudit fond (12) étant prévue pour venir en contact avec ladite partie amovible.
- Conformément à l'invention, le support isolant comprend un substrat céramique (21) ayant des pistes conductrices sérigraphiées (22), la thermistance (24) étant montée en surface sur le substrat céramique (21) par des soudures reliées aux pistes conductrices sérigraphiées (22), le fond (12) présentant une partie plane sur laquelle est monté le substrat céramique (21).

## Description

La présente invention se rapporte au domaine technique général des appareils électroménagers. La présente invention concerne plus particulièrement les appareils électroménagers comportant un élément amovible dont on souhaite mesurer la température.

Les appareils électroménagers concernés comprennent notamment les appareils de cuisson comportant une cuve, tels que par exemple les friteuses ou les cuiseurs à riz.

Il est connu de réaliser des friteuses électriques à cuve amovible comportant un capteur de température associé à une régulation électronique. Le capteur de température utilisé comporte une thermistance de type CTN.

Selon un premier mode de réalisation, la thermistance est noyée dans de la résine déposée dans une coupelle en matière plastique. Une coupelle métallique extérieure recouvre la coupelle en matière plastique. La coupelle métallique est prévue pour venir en contact avec l'élément dont on souhaite mesurer la température. Un tel montage a toutefois l'inconvénient de présenter une inertie assez importante.

Selon un deuxième mode de réalisation, la thermistance est montée contre une rondelle de mica métallisée argent. Une coupelle métallique permet de sertir la rondelle sur un boîtier réalisé en matière plastique. Deux ressorts assurent un contact électrique entre la thermistance ou la rondelle, d'une part, et une cosse, d'autre part. Un tel montage présente une inertie moindre. Cependant, la construction d'un tel montage est relativement onéreuse.

On constate que ces réalisations ne permettent pas d'obtenir un capteur de température conciliant de bonnes performances thermiques avec un coût peu élevé.

L'objet de la présente invention est de proposer un capteur de température pour appareil électroménager comportant un élément amovible, qui présente une inertie réduite et une construction peu onéreuse.

Un autre objet de la présente invention est de proposer un capteur de température pour appareil électroménager comportant un élément amovible, qui présente une bonne isolation électrique.

Un autre objet de la présente invention est de proposer un capteur de température pour appareil électroménager comportant un élément amovible, qui présente une bonne solidité mécanique.

Ces objets sont atteints avec un capteur de température pour appareil électroménager comportant une partie amovible par rapport à un bâti, ce capteur comprenant une thermistance montée sur un support isolant disposé sur la face interne d'un fond d'une coupelle, la face externe dudit fond étant prévue pour venir en contact avec ladite partie amovible, du fait que le support isolant comprend un substrat céramique ayant des pistes conductrices sérigraphiées, la thermistance étant montée en surface sur le substrat céramique par des soudures reliées aux pistes conductrices sérigraphiées, le fond présentant une partie plane sur laquelle est monté le substrat céramique. Cette construction permet de protéger le capteur des chocs et de protéger l'utilisateur du risque de contact de pièces sous tension. Les distances d'isolation électrique sont respectées par construction. Les surfaces d'échange entre le capteur et la partie mobile dont on souhaite mesurer la température sont grandes, ce qui facilite le transfert du flux thermique. Le flux thermique est transmis de la partie mobile dont on souhaite mesurer la température à la thermistance par le fond de la coupelle, le substrat céramique, les pistes conductrices sérigraphiées et les soudures. Le comportement thermique ainsi obtenu est très réactif du fait de masses peu importantes et de l'absence de traversée d'épaisseurs importantes de matériau mauvais conducteur de la chaleur tel que de la résine. Le montage de ce capteur est simple et les constituants sont peu onéreux.

Les pistes conductrices sérigraphiées peuvent notamment être reliées électriquement à des cosses, à des fils ou à des connecteurs.

Avantageusement, la coupelle est réalisée dans un matériau ayant une bonne conductivité thermique, par exemple en aluminium.

Selon une forme de réalisation avantageuse, la coupelle est obtenue par emboutissage d'une pièce métallique.

D'autres formes de réalisation sont également envisageables notamment une coupelle obtenue par découpage et pliage d'une tôle.

Avantageusement le capteur est relié au bâti par un moyen élastique. Cette disposition permet de faciliter le contact avec la partie mobile dont on souhaite mesurer la température.

Selon un mode de réalisation avantageux, le moyen élastique est formé par une pièce ressort. La mise en place sur le bâti des éléments du capteur, incluant la pièce ressort, peut s'effectuer de manière simple.

Selon une forme de réalisation avantageuse, la pièce ressort est formée par un fil métallique.

Avantageusement, le capteur comporte une pièce de maintien comportant des passages pour des cosses montées sur le substrat céramique. Cette pièce permet également de protéger le capteur. En alternative ou en complément, le substrat céramique peut être collé dans la coupelle, voire soudé ou brasé à ladite coupelle après métallisation du substrat.

Avantageusement encore, la pièce ressort comporte des éléments de maintien coopérant avec la pièce de maintien.

Avantageusement alors, la pièce de maintien comporte des pattes de centrage prévues pour un appui contre des parois latérales de la coupelle.

Avantageusement encore, la pièce de maintien comporte deux montants présentant chacun une encoche prévue pour recevoir l'un des éléments de maintien de la pièce ressort.

En alternative ou en complément, le substrat céramique peut être collé sur le fond de la coupelle, voire soudé ou brasé après une métallisation préalable.

L'invention sera mieux comprise à l'étude d'un exemple de réalisation, pris à titre nullement limitatif, et illustré dans les figures annexées, dans lesquelles :
- la figure 1 est une vue en éclaté d'un capteur de température selon l'invention monté dans un support appartenant à une friteuse,
- la figure 2 est une vue en coupe du substrat céramique sur lequel est montée la thermistance,
- la figure 3 est une vue de dessous du capteur en place dans la friteuse,
- la figure 4 est une vue partielle en coupe de la friteuse selon le plan médian du capteur.

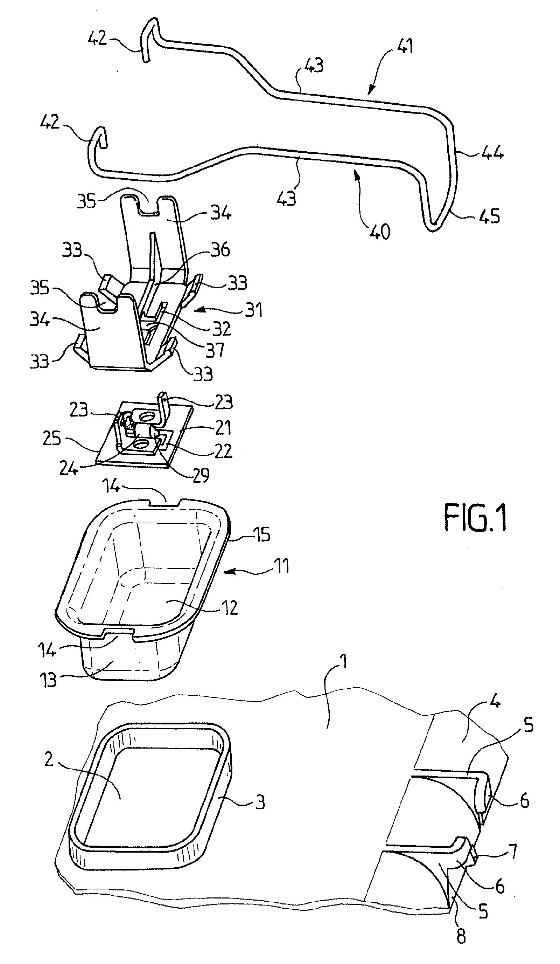

La figure 1 illustre le montage du capteur selon l'invention sur un support 1 d'un appareil électroménager tel que par exemple une friteuse. Le capteur comporte une coupelle 11 présentant un fond 12 et des parois latérales 13 terminées par un rebord 15. La coupelle 11 est logée dans une ouverture 2 ménagée dans le support 1. Une nervure 3 entoure l'ouverture 2. Le rebord 15 délimite une surface supérieure à celle de l'ouverture 2 afin d'empêcher la sortie de la coupelle 11. De préférence la coupelle 11 est réalisée en un matériau bon conducteur de chaleur. La coupelle 11 est par exemple obtenue par emboutissage d'une pièce en aluminium.

Le fond 12 de la coupelle 11 présente une partie plane prévue pour recevoir un substrat céramique 21 sur lequel est monté en surface une thermistance 24. Le substrat céramique 21 forme un support isolant 25 et présente l'avantage de mieux conduire la chaleur qu'une pièce d'épaisseur équivalente réalisée en résine polymère. Une épaisseur de l'ordre de 0,6 à 0,7 mm est suffisante pour obtenir une bonne solidité mécanique tout en assurant une isolation électrique satisfaisante. Pour une meilleure conduction de la chaleur, le substrat 21 est monté sur la face interne du fond 12 de la coupelle 11. Le fond 12 présente une partie plane sur laquelle est monté le substrat céramique 21.

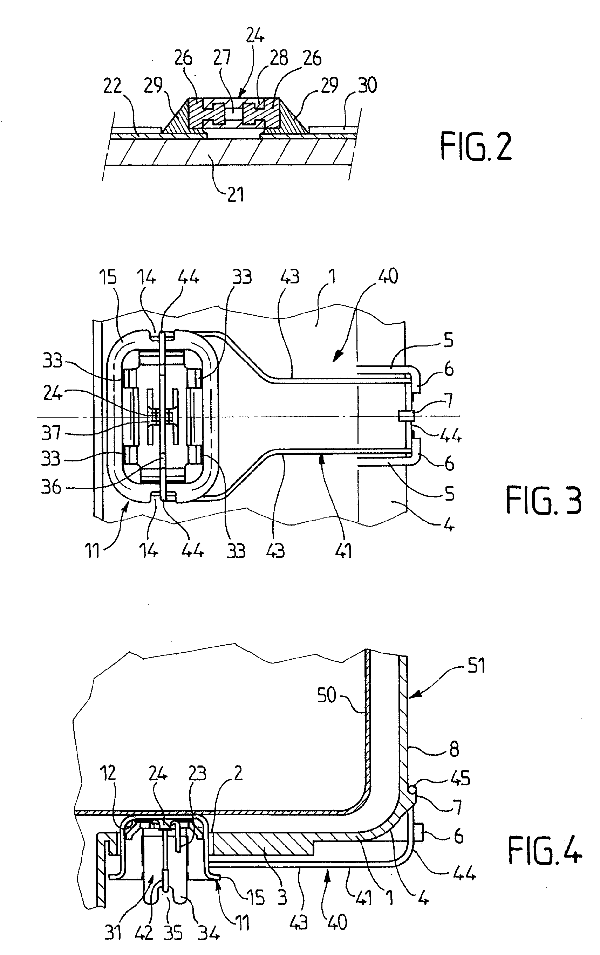

Le substrat 21 porte des pistes conductrices sérigraphiées 22 reliant la thermistance 24 à deux cosses 23. La figure 2 montre de manière plus détaillée la liaison entre la thermistance 24 et les pistes sérigraphiées 22. La thermistance 24 comporte une résistance à coefficient de température négatif (CTN) 27 montée entre deux bornes 26 et noyée dans du verre 28. Chaque borne 26 est reliée à une piste sérigraphiée 22 par une soudure 29. Il n'est pas nécessaire que le verre 28 soit en contact avec le substrat céramique 21 car les échanges therrmiques entre la résistance 27 et le substrat 21 s'effectuent par les soudures 29. L'épaisseur relativement limitée du substrat céramique 21 favorise le transfert thermique des calories de la coupelle 11 à la résistance 27 via le substrat 21 les pistes 22 et les soudures 29. Une couche de vernis 30 peut recouvrir si nécessaire les pistes conductrices 22 en dehors des zones de connexion.

Une pièce de maintien 31 présente deux passages 32 prévus pour la sortie des cosses 23. Une découpe 37 permet de loger la thermistance 24. Une nervure 36 formant un pont au dessus de la découpe 37 permet de protéger la thermistance 24 tout en favorisant l'évacuation de chaleur. La pièce de maintien 31 comporte des pattes de centrage 33 prévues pour prendre appui contre les parois latérales 13 de la coupelle 11. Les pattes 33 sont avantageusement inclinées vers le haut pour éviter le rayon du chanfrein de la coupelle 11 reliant le fond 12 aux parois latérales 13. La pièce 31 comporte deux montants 34 présentant en leur extrémité libre des encoches 35 prévues pour recevoir des éléments de maintien 42 appartenant à une pièce ressort 41. La nervure 36 relie les deux montants 34 et permet de rigidifier la pièce 31.

La pièce ressort 41 comporte un élément d'accrochage 44 duquel sont issus deux bras 43. Les éléments de maintien 42 sont formés par deux crochets ménagés chacun à l'extrémité de l'un des bras 43. L'élément d'accrochage 44 consiste en une partie recourbée 45 ménagée à l'extrémité opposée aux éléments de maintien 42. Le support 1 comporte un moyen d'accrochage constitué d'un ergot 7 encadré par deux nervures de guidage 5 terminées chacune par une patte latérale recourbée 6. L'ergot 7 est avantageusement ménagé sur une face latérale 8 du support 1 reliée par un arrondi 4 à la face comportant l'ouverture 2.

Les figures 3 et 4 montrent le capteur assemblé en place sur le support 1. La face extérieure du fond 12 de la coupelle vient en appui contre une pièce amovible 50 de l'appareil. La pièce 50 est par exemple une cuve amovible. Le capteur est monté sur un bâti 51 de l'appareil. L'élément d'accrochage 44 est maintenu par l'ergot 7 et les pattes latérales recourbées 6. Les bras 43 exercent un effet ressort pour ramener les éléments de maintien 42 vers l'ouverture 2.

La surface de la partie plane du fond 12 en contact avec la pièce 50 est relativement limitée, par exemple de l'ordre de 14 mm sur 20 mm. Les pistes sérigraphiées 22 sont établies à distance des bords du substrat isolant 21, par exemple à au moins 2,5 mm des bords du substrat 21, ce qui permet de respecter sans difficulté les distances d'isolation électrique nécessaires. De ce fait, la partie plane du fond 12 de la coupelle 11 peut présenter des dimensions égales ou peu supérieures à celles du substrat 21. Cette disposition facilite un bon contact de la coupelle 11 avec la pièce 50.

Le montage du capteur selon l'invention est particulièrement simple. Les passages 32 de la pièce de maintien 31 permettent de positionner les cosses 23 montées sur le substrat céramique 21. Les pattes 33 immobilisent la pièce de maintien 31 par rapport à la coupelle 11 qui peut être mise en place dans l'ouverture 2. L'élément d'accrochage 44 est mis en place par simple translation le long des pattes latérales recourbées 4 et est maintenu par l'ergot 7. Les éléments de maintien 42 prennent appui dans les encoches 35 de la pièce de maintien 31.

Le fonctionnement thermique du capteur présente une faible inertie du fait de l'absence d'épaisseurs importantes de matériaux mauvais conducteurs de la chaleur. Les calories issues de la partie amovible 50, dont on souhaite mesurer la température, traversent successivement la paroi du fond 12 de la coupelle 11, le substrat céramique 21, puis les soudures 29 et les bornes 26 avant d'atteindre le composant 27.

Le montage souple du capteur sur le bâti 51 par l'intermédiaire de la pièce ressort 41 favorise un bon contact thermique entre la partie amovible 50 et la coupelle 11.

A titre de variante, la pièce de maintien 31 pourrait être supprimée. Le substrat céramique 21 peut alors par exemple être collé sur le fond 12 de la coupelle 11. Le substrat céramique 21 peut également, après métallisation, être brasé ou soudé à la coupelle 11 métallique. Les éléments de maintien de la pièce ressort 41 peuvent alors coopérer avec la coupelle 11, par exemple au niveau des encoches 14.

A titre de variante, un montage souple du capteur sur le bâti 51 peut être envisagé en utilisant d'autres moyens élastiques que la pièce ressort 41, par exemple un ressort hélicoïdal monté autour de la coupelle 11.

La présente invention n'est nullement limitée à l'exemple de réalisation décrit et à ses variantes, mais englobe de nombreuses modifications dans le cadre des revendications.

## Revendications

1. Capteur de température pour appareil électroménager comportant une partie amovible (50) par rapport à un bâti (51), ce capteur comprenant une thermistance (24) montée sur un support isolant (25) disposé sur la face interne d'un fond (12) d'une coupelle (11), la face externe dudit fond (12) étant prévue pour venir en contact avec ladite partie amovible (50), **caractérisé en ce que** le support isolant comprend un substrat céramique (21) ayant des pistes conductrices sérigraphiées (22), la thermistance (24) étant montée en surface sur le substrat céramique (21) par des soudures reliées aux pistes conductrices sérigraphiées (22), le fond (12) présentant une partie plane sur laquelle est monté le substrat céramique (21).

2. Capteur de température selon la revendication 1, **caractérisé en ce que** la coupelle (11) est réalisée dans un matériau ayant une bonne conductivité thermique.

3. Capteur de température selon l'une des revendications 1 ou 2, **caractérisé en ce que** la coupelle (11) est obtenue par emboutissage d'une pièce métallique.

4. Capteur de température selon l'une des revendications 1 à 3, **caractérisé en ce que** le capteur est relié au bâti (51) par un moyen élastique (40).

5. Capteur de température selon la revendication 4, **caractérisé en ce que** le moyen élastique (40) est formé par une pièce ressort (41).

6. Capteur de température selon la revendication 5, **caractérisé en ce que** la pièce ressort (41) est formée par un fil métallique.

7. Capteur de température selon l'une des revendications 1 à 6, **caractérisé en ce que** le capteur comprend une pièce de maintien (31) comportant des passages (32) pour des cosses (23) montées sur le substrat céramique (21).

8. Capteur de température selon les revendications 5 et 7 ou les revendications 6 et 7, **caractérisé en ce que** la pièce ressort (41) comporte des éléments de maintien (42) coopérant avec la pièce de maintien (31).

9. Capteur de température selon la revendication 8, **caractérisé en ce que** la pièce de maintien (31) comporte deux montants (34) présentant chacun une encoche (35) prévue pour recevoir l'un des éléments de maintien (42) de la pièce ressort (41).

10. Capteur de température selon l'une des revendications 7, 8 ou 9, **caractérisé en ce que** la pièce de maintien (31) comporte des pattes de centrage (33) prévues pour un appui contre des parois latérales (13) de la coupelle (11).

11. Capteur de température selon l'une des revendications 1 à 10, **caractérisé en ce que** le substrat céramique (21) est collé sur le fond (12) de la coupelle (11).

12. Capteur de température selon l'une des revendications 1 à 10, **caractérisé en ce que** le substrat céramique (21) est soudé ou brasé sur le fond (12) de la coupelle (11) après métallisation.
